Europäisches Patentamt

**European Patent Office**

Office européen des brevets

(19)

(11) Veröffentlichungsnummer: **0 275 341**
B1

(12) **EUROPÄISCHE PATENTSCHRIFT**

(45) Veröffentlichungstag der Patentschrift:
**10.05.89**

(51) Int. Cl.⁴: **G01B 3/12**, G01C 22/02

(21) Anmeldenummer: **87100879.3**

(22) Anmeldetag: **22.01.87**

(54) Verfahren zur genauen Bestimmung der von einem landwirtschaftlichen Arbeitsgerät zurückgelegten Wegstrecke.

(43) Veröffentlichungstag der Anmeldung:
**27.07.88 Patentblatt 88/30**

(45) Bekanntmachung des Hinweises auf die Patenterteilung:
**10.05.89 Patentblatt 89/19**

(84) Benannte Vertragsstaaten:
**DE FR GB NL**

(56) Entgegenhaltungen:
**DE-A- 2 004 714**
**DE-A- 2 417 407**
**DE-A- 2 845 296**
**DE-B- 2 549 780**
**DE-B- 2 751 012**
**US-A- 4 308 665**

(73) Patentinhaber: **Kirchberger, Franz, Lichtenfelser Strasse 43, D-8623 Staffelstein(DE)**

(72) Erfinder: **Kirchberger, Franz, Lichtenfelser Strasse 43, D-8623 Staffelstein(DE)**

(74) Vertreter: **LOUIS, PÖHLAU, LOHRENTZ & SEGETH, Kesslerplatz 1 Postfach 3055, D-8500 Nürnberg(DE)**

**Beschreibung**

Die Erfindung betrifft ein Verfahren zur genauen Bestimmung der von einem landwirtschaftlichen Arbeitsgerät zurückgelegten Wegstrecke, bei dem die Drehung der Räder des Arbeitsgerätes gemessen und zur Bestimmung des Schlupfes mit einer tatsächlich zurückgelegten Wegstrecke verglichen wird.

Bei einem derartigen Verfahren wird der Schlupf der Räder, insbesondere der Antriebsräder des landwirtschaftlichen Arbeitsgerätes während einer Fahrt entlang einer mindestens annähernd horizontalen Wegstrecke gemessen. Die Schlupfmessung erfolgt dadurch, dass die Anzahl Drehungen der Räder des landwirtschaftlichen Arbeitsgerätes und damit die Zahl der Aussenumfänge mit der tatsächlich zurückgelegten Wegstrecke verglichen wird. Bekanntermassen hängt der Schlupf eines Rades von der Beschaffenheit des Bodens, von dem in das Rad eingeleiteten Antriebsdrehmoment, vom Durchmesser des Rades, vom Walkverhalten des Rades und von der Einsinktiefe des Rades ab. Da demzufolge der Schlupf der Antriebsräder während einer Bergauffahrt und der Schlupf während einer Bergabfahrt voneinander und von dem während einer Fahrt entlang einer waagrechten Wegstrecke verschieden sind, ergeben sich bei einer Fahrt im unebenen Gelände Messungenauigkeiten. Aufgrund dieser Messungenauigkeiten ist eine auf der Grundlage einer entlang einer waagrechten Messstrecke bestimmten Wegstreckenmessung angelegte Schlagkartei eines an einem Hang liegenden Schlages ungenau.

Der vorliegenden Erfindung liegt deshalb die Aufgabe zugrunde, ein Verfahren der eingangs genannten Art zu schaffen, bei dem die mit dem landwirtschaftlichen Arbeitsgerät zurückgelegte Wegstrecke genauer bestimmt werden kann als bei einem bekannten Verfahren der eingangs genannten Art, wenn mit dem landwirtschaftlichen Arbeitsgerät ein Hang befahren wird.

Diese Aufgabe wird erfindungsgemäss dadurch gelöst, dass der Schlupf entlang bestimmter topographischer Intervalle der Wegstrecke bestimmt wird. Diese Intervalle können eine Steigung, eine Neigung und/oder unterschiedliche Bodeneigenschaften aufweisen.

Beim erfindungsgemässen Verfahren hat es sich als zweckmässig erwiesen, dass der Schlupf bei einer Bergauffahrt bestimmt wird, dass dann die Änderung von der Bergauffahrt zur Bergabfahrt bestimmt wird, und dass danach der Schlupf bei einer Bergabfahrt bestimmt wird. Vorzugsweise wird der Schlupf bei einer Bergauffahrt und bei der daran unmittelbar anschliessenden Bergabfahrt bestimmt, weil in diesem Fall die tatsächlich zurückgelegte Wegstrecke einfach und genau bestimmbar ist.

Es ist möglich, die Änderung von der Bergauffahrt zur Bergabfahrt in die Messeinrichtung zur Bestimmung des Schlupfes manuell einzugeben. Als vorteilhaft hat es sich jedoch erwiesen, dass die Änderung von der Bergauffahrt zur Bergabfahrt automatisch bestimmt wird. Das ist beispielsweise durch einen Neigungssensor oder durch einen Sensor möglich, mit dem Lenkeinschläge feststellbar sind. Bei einem Neigungssensor der zuletzt genannten Art kann es sich beispielsweise um einen Quecksilberschalter handeln. Die Drehung der Räder, insbesondere der Antriebsräder, kann beispielsweise durch induktive oder optische Geber bestimmt werden. Optische Geber weisen jedoch den Mangel auf, dass sie bei landwirtschaftlichen Arbeitsgeräten leicht verschmutzen können. Demgegenüber sind induktive Geber problemlos anwendbar.

Dadurch, dass der Schlupf der Räder sowohl während einer Bergauffahrt als auch während einer Bergabfahrt entlang einer genau definierten Wegstrecke bestimmt wird, ist es mit dem erfindungsgemässen Verfahren möglich, die gesamte von einem landwirtschaftlichen Arbeitsgerät an einem Hang zurückgelegte Wegstrecke durch die Bestimmung der Anzahl Drehungen der Räder wesentlich genauer zu bestimmen, als bei Anwendung eines bekannten Verfahrens, bei dem der Schlupf der Räder entlang einer mindestens annähernd waagrechten Wegstrecke bestimmt wird. Aus dem erfindungsgemässen Verfahren resultiert somit eine sog. Schlagdatei eines an einem Hang befindlichen Schlags, die wesentlich genauer ist als die bislang erfassten Hang-Schlagkarteien.

Der Schlupf kann aus einer während der Zurücklegung der Acker-Wegstrecke simultan nachgefahrenen Speicherwegstreckendatei bestimmt werden. Auf diese Weise ergibt sich eine automatische genaue Bestimmung der Wegstrecke und damit eine einfache Erstellung einer genauen Schlagdatei.

Weitere Einzelheiten, Merkmale und Vorteile ergeben sich aus der nachfolgenden Beschreibung eines in der Zeichnung schematisch dargestellten landwirtschaftlichen Arbeitsgerätes auf einem ansteigenden Boden und der Abhängigkeit des Schlupfes von der vom landwirtschaftlichen Arbeitsgerät zurückgelegten Wegstrecke. Es zeigt:

Figur 1 eine Seitenansicht eines landwirtschaftlichen Arbeitsgerätes, z.B. eines Traktores, während einer Bergauffahrt entlang einer abschnittweise dargestellten Wegstrecke, und

Figur 2 die Abhängigkeit des Schlupfes s der Räder, insbesondere der Antriebsräder des in Figur 1 dargestellten landwirtschaftlichen Arbeitsgerätes in Abhängigkeit von der an einem Hang zurückgelegten Wegstrecke x.

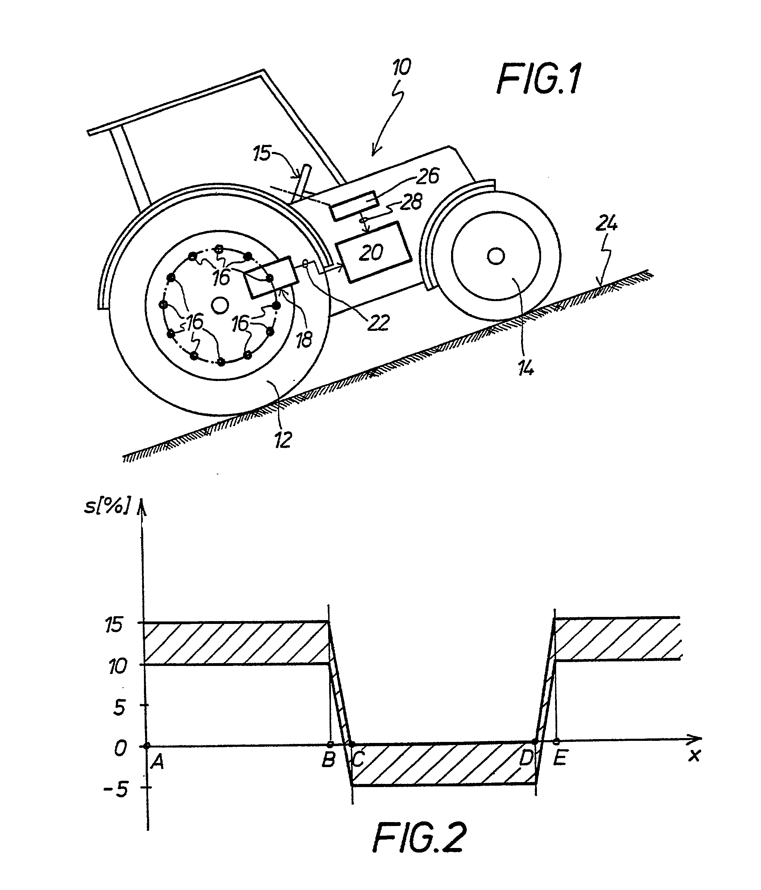

Figur 1 zeigt in einer Seitenansicht ein landwirtschaftliches Arbeitsgerät 10, dessen Hinterräder 12 angetrieben sind. Die Vorderräder 14 sind mit der Lenkung 15 wirkverbunden.

Zur Bestimmung des drehmomentabhängigen Schlupfes der angetriebenen Hinterräder 12 ist mindestens ein Hinterrad 12 mit entlang eines Kreises gleichmässig verteilten Induktionselementen 16 versehen. In einem kleinen Abstand von diesen Induktionselementen 16 ist ein Sensor 18 angeordnet, der in dieser Figur schematisch durch einen Block dargestellt ist. Bewegen sich bei einer Drehung des Hinterrades 12 die Induktionselemente 16 nacheinander am Sensor 18 vorbei, so ändert sich dessen Induktivität impulsförmig. Die einzelnen Induktions-Impulse werden an eine elektronische Zähleinrichtung 20 abgegeben, was in Figur 1 durch den Pfeil 22 angedeutet ist.

Mit Hilfe der elektronischen Zähleinrichtung 20 ist es möglich, die Drehung des bzw. jedes Hinterrades 12 zu messen. Aus der Anzahl Drehungen des/jedes Hinterrades 12 und dem Aussenumfang jedes Hinterrades 12 ist eine Wegstrecke berechenbar. Der Quotient aus der so berechneten Wegstrecke zur entlang des Hanges 24 tatsächlich zurückgelegten Wegstrecke ergibt den Schlupf s der angetriebenen Hinterräder 12.

In Figur 2 ist der Schlupf s in Abhängigkeit von der mit dem landwirtschaftlichen Arbeitsgerät 10 zurückgelegten Wegstrecke x schematisch dargestellt. Dabei entspricht die Wegstrecke x zwischen den Punkten A und B einer Bergauffahrt des landwirtschaftlichen Arbeitsgerätes 10, die Wegstrecke zwischen den Punkten B und C einer Umkehr des landwirtschaftlichen Arbeitsgerätes 10 und die Wegstrecke zwischen den Punkten C und D einer Bergabfahrt entlang des Hanges 24 (sh. Figur 1). Die Wegstrecke x zwischen den Punkten D und E entspricht wiederum einer Umkehr des landwirtschaftlichen Arbeitsgerätes 10, auf welche wiederum eine Bergauffahrt folgt. Aus Figur 2 ist ersichtlich, dass der Schlupf s während der Bergauffahrt im Bereich zwischen 10 und 15 % liegt, wobei diese %-Angaben je nach der Steigung des Hanges 24 und seiner Bodenbeschaffenheit auch grösser oder kleiner sein kann. Während der Bergabfahrt kann der Schlupf s – wie in Figur 2 dargestellt – auch negativ sein. Selbstverständlich ist der in Figur 2 gezeichnete Bereich des Schlupfes s während der Bergabfahrt nicht auf den dargestellten Bereich beschränkt. Aus Figur 2 soll nur deutlich werden, dass der Schlupf s während der Bergauffahrt sich vom Schlupf s während der Bergabfahrt unterscheidet.

Zur automatischen Feststellung der Änderung von einer Bergauffahrt des landwirtschaftlichen Gerätes 10 zu einer Bergabfahrt, und umgekehrt, dient eine Einrichtung 26, die in Figur 1 durch einen Block schematisch dargestellt ist. Bei dieser Einrichtung 26 kann es sich um einen Neigungssensor in Gestalt z.B. eines Quecksilberschalters, oder um einen Sensor handeln, mit dessen Hilfe ein bestimmter Lenkeinschlag der Lenkeinrichtung 15 festgestellt wird. Mit der Einrichtung 26, die mit der elektronischen Zähleinrichtung 20 wirkverbunden ist, ist es möglich, jede Änderung zwischen einer Bergauffahrt und einer Bergabfahrt des landwirtschaftlichen Arbeitsgerätes 10 automatisch festzustellen. Die Wirkverbindung zwischen der Einrichtung 26 und der elektronischen Zähleinrichtung 20 ist in Figur 1 durch den Pfeil 28 schematisch angedeutet.

Dadurch, dass beim erfindungsgemässen Verfahren der Schlupf s sowohl entlang einer bestimmten Wegstrecke bei einer Bergauffahrt als auch während einer Bergabfahrt bestimmt wird, ist der schlupfbedingte Fehler der Wegstreckenmessung wesentlich besser kompensiert als bei einem Verfahren, bei dem der Schlupf nur entlang einer annähernd waagrechten Wegstrecke bestimmt wird.

Beim erfindungsgemässen Verfahren ist es selbstverständlich auch möglich, zuerst den Schlupf während einer Bergabfahrt und anschliessend den Schlupf während einer Bergauffahrt zu bestimmen.

## Patentansprüche

1. Verfahren zur genauen Bestimmung der von einem landwirtschaftlichen Arbeitsgerät zurückgelegten Wegstrecke, bei dem die Wegstrecke aus der Zahl der Drehungen der Räder des Arbeitsgerätes bestimmt und zur Bestimmung des Schlupfes mit einer tatsächlich zurückgelegten Wegstrecke verglichen wird, dadurch gekennzeichnet, dass der Schlupf entlang topographisch bestimmter Intervalle der Wegstrecke bestimmt wird.

2. Verfahren nach Anspruch 1, dadurch gekennzeichnet, dass der Schlupf bei einer Bergauffahrt bestimmt wird, dass dann die Änderung von der Bergauffahrt zur Bergabfahrt bestimmt wird, und dass danach der Schlupf bei einer Bergabfahrt bestimmt wird.

3. Verfahren nach Anspruch 2, dadurch gekennzeichnet, dass die Änderung von der Bergauffahrt zur Bergabfahrt automatisch bestimmt wird.

4. Verfahren nach einem der Ansprüche 1 bis 3, dadurch gekennzeichnet, dass der Schlupf aus einer während der Zurücklegung der Acker-Wegstrecke simultan nachgefahrenen Speicherwegstreckendatei bestimmt wird.

## Claims

1. A method for the exact determination of the distance covered by an agricultural machine wherein the distance travelled is determined from the number of rotations of the wheels of the machines and wherein it is compared with a distance of travel actually covered in order to determine the slippage, characterised in that the slippage is determined along certain topographically determined sectors of the distance of travel.

2. A method according to claim 1, characterised in that the slippage is determined during an uphill travel, that the change from the uphill travel to downhill travel is then determined, and that thereupon, the slippage is determined during a downhill travel.

3. A method according to claim 2, characterised in that the change from the uphill travel to downhill travel is determined automatically.

4. A method according to one of claims 1 to 3, characterised in that the slippage is determined from a data storage record of the distance travelled, simultaneously reproduced as the travel distance is covered on the field.

## Revendications

1. Procédé permettant la détermination exacte de la distance parcourue par un outillage agricole, selon lequel on détermine la distance parcourue à partir du nombre des tours que font les roues de l'outillage et on la compare, en vue de déterminer le glissement, à une distance réellement parcourue, caractérisé en ce qu'on détermine le glissement le long d'intervalles de la distance parcourue qui sont déterminés sur le plan topographique.

2. Procédé suivant la revendication 1, caractérisé en ce qu'on détermine le glissement à l'occasion d'une montée, on détermine alors la variation entre la montée et la descente et on détermine ensuite le glissement à l'occasion d'une descente.

3. Procédé suivant la revendication 2, caractérisé en ce qu'on détermine automatiquement la variation existant entre la montée et la descente.

4. Procédé suivant l'une quelconque des revendications 1 à 3, caractérisé en ce qu'on détermine le glissement à partir d'un fichier de données mis en mémoire et portant sur les distances parcourues simultanément au cours du parcours du trajet effectué dans un champ.

*FIG.1*

*FIG.2*